# EUROPEAN PATENT APPLICATION

(11) **EP 4 648 409 A1**
(43) Date of publication of application: **12.11.2025**
(21) Application number: 25170475.5
(22) Date of filing: 14.04.2025
(51) Int. Cl.: H04N 19/115, H04N 19/164, H04N 19/172, H04N 19/436

(54) **SYSTEMS AND METHODS FOR FAST ENCODER SWITCHING**

(30) Priority: 08.05.2024 US 202418658357
(71) Applicant: Honeywell International Inc., Charlotte, NC 28202 (US)
(72) Inventor: HAMADA, Adam, Charlotte, 28202 (US)
(74) Representative: Haseltine Lake Kempner LLP

(57) **Abstract**

Embodiments of the present disclosure provide systems and methods for fast encoder switching. In one embodiment, a plurality of image encoding devices of a vehicle receive image data comprising a plurality of frames from an imaging component of the vehicle. A first image encoding device of the plurality of image encoding devices encodes a first frame of the plurality of frames at a first bit rate. A second image encoding device of the plurality of image encoding devices encodes the first frame of the plurality of frames at a second bit rate simultaneously with the first image encoding device encoding the first frame at the first bit rate. One or more communication components of the vehicle encode transmit the first frame encoded at the first bit rate.

## Description

### TECHNICAL FIELD

Embodiments of the present disclosure generally relate to techniques for reducing latency in the display and communication of image data, and specifically to systems and methods for fast encoder switching.

### BACKGROUND

Various techniques and systems may be utilized to encode image data. For example, a variable bit rate encoder may be utilized to encode a video data stream using at one or more bit rates. In some examples, a receiving device may receive encoded image data from a transmitting device and determine one or more quality metrics for the encoded image data. The receiving device may then transmit a feedback message indicative of the one or more quality metrics to the transmitting device. In some examples, a bit rate of the variable bit rate encoder may be modified based on the one or more quality metrics in an effort to maintain a specific level of data quality. In response to receiving the feedback message, data that has already been processed by the video encoder may be flushed, and the video encoder may then begin encoding a new input image with updated parameters, such as an updated bit rate. Such an interruption may be observed at a video receiver as latency, which may be undesirable and may result in poor user experience. Additionally, conventional techniques for switching encoder bit rate may require sending a new I-frame, which may cause a peak in bit rate and an associated delay in data delivery.

### BRIEF SUMMARY

In accordance with a first aspect of the disclosure, a method is provided. In some embodiments, the method is executable by one or more computing devices embodied in hardware, software, firmware, and/or any combination thereof as described herein. In some example embodiments, the example method includes receiving, from an imaging component of a vehicle and by a plurality of image encoding devices of the vehicle, image data comprising a plurality of frames; encoding, by a first image encoding device of the plurality of image encoding devices, a first frame of the plurality of frames at a first bit rate; encoding, by a second image encoding device of the plurality of image encoding devices, the first frame of the plurality of frames at a second bit rate simultaneously with the first image encoding device encoding the first frame at the first bit rate; and transmitting, by one or more communication components of the vehicle, the first frame encoded at the first bit rate.

In some example embodiments, the method further includes receiving, by the one or more communication components of the vehicle, a feedback message comprising an indication of a quality metric for the first frame encoded at the first bit rate; encoding, by the second image encoding device of the plurality of image encoding devices, a second frame of the plurality of frames at the second bit rate; and transmitting, by the one or more communication components of the vehicle and based at least in part on the indication of the quality metric, the second frame encoded at the second bit rate.

In some example embodiments, the second frame is successive to the first frame. In some example embodiments, the method further includes encoding, by the first image encoding device of the plurality of image encoding devices, the second frame of the plurality of frames at the first bit rate simultaneously with the second image encoding device encoding the second frame at the second bit rate. In some example embodiments, the quality metric comprises a packet error rate.

In some example embodiments, the first frame encoded at the first bit rate is transmitted via a satellite communication link. In some example embodiments, the first image encoding device is configured to continuously encode the image data at the first bit rate and the second image encoding device is configured to continuously encode the image data at the second bit rate. In some example embodiments, transmitting the first frame encoded at the first bit rate further comprises: transmitting the first frame to a ground-based communication component.

In accordance with a second aspect of the disclosure, an apparatus is provided. In one example embodiment of the apparatus, an example apparatus includes one or more processors and a memory storing instructions that, when executed by the one or more processors, cause the apparatus to perform any one of the methods described herein. A second example apparatus includes means for performing each step of any one of the methods described herein.

In accordance with a third aspect of the disclosure, a system is provided. In one example embodiment, an example system includes an imaging component, a plurality of image encoding devices, and one or more communication components configured to perform any one of the methods described herein. In one example embodiment of the system, an example system includes one or more non-transitory computer-readable storage media having computer program code stored thereon that, in combination with one or more processors, are configured for performing any one of the example methods described herein.

### BRIEF DESCRIPTION OF THE DRAWINGS

FIG. 1 illustrates a system for fast encoder switching in accordance with one or more embodiments of the present disclosure.
FIG. 2 illustrates a block diagram of a computing device for fast encoder switching in accordance with one or more embodiments of the present disclosure.
FIG. 3 is a dataflow diagram showing example data structures and associated devices for fast encoder switching in accordance with one or more embodiments of the present disclosure.
FIG. 4 is an operational example of an encoder configuration that enables fast encoder switching in accordance with one or more embodiments of the present disclosure.
FIG. 5 is an operational example of a communication schematic that illustrates fast encoder switching in accordance with one or more embodiments of the present disclosure.
FIG. 6 illustrates a process for fast encoder switching in accordance with one or more embodiments of the present disclosure.
FIG. 7 illustrates a process for fast encoder switching in accordance with one or more embodiments of the present disclosure.

### DETAILED DESCRIPTION

Various embodiments of the present disclosure are described more fully hereinafter with reference to the accompanying drawings, in which some, but not all embodiments of the present disclosure are shown. Indeed, the present disclosure may be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based at least in part on," "based at least on," "based upon," and/or similar words are used herein interchangeably in an open-ended manner such that they do not necessarily indicate being based only on or based solely on the referenced element or elements unless so indicated. Like numbers refer to like elements throughout.

### OVERVIEW

In recent years, satellite communication (satcom) has become increasingly prevalent in a variety of technical fields, such as aerospace. In one example use case, small satellite terminals for aerial vehicles may be utilized to transmit real time high definition (HD) video over narrow link at up to 200 kilobits per second (kbps). Such use cases may present various encoding challenges. For example, maintaining a bit rate of less than 200 kbps and achieving reasonable image quality may be challenging. From prior testing of class 15 small satcom at 200 kbps, measured bandwidth values range from 70 kbps to 170 kbps. Factors such as banking, elevation, weather, network performance, and/or the like may contribute to the limitation of available bandwidth.

In some examples, satcom users that wish to transmit video data may utilize a feedback loop from a ground station to a satcom terminal, such as a small satcom terminal of a vehicle. In such examples, the ground station may transmit a feedback message that indicates a quality metric, such as a packet error rate in order to maintain smooth, real-time video communications. The packet error rate may then be utilized by the satcom terminal to adjust video encoder parameters based on given network conditions. In such examples, a video camera may output still images at a rate specified by the camera frame rate (e.g., 30 frames per second (fps)). The still images may be output in a format that is accepted by the video encoder.

The still images may be manipulated (e.g., by a buffer) prior to being transmitted to the video encoder. For example, image parameters such as resolution and color may be modified. Additionally, or alternatively, the still images may be sub sampled and/or a frame rate of the still images may be modified. The still images may then be transmitted to the encoder, which may have a variable bit rate, a specific resolution, a specific frame format (e.g., an i-frame format, a p-frame format, and/or a b-frame format), a specific encoding rate for i-frames, and/or a specific encoded frame rate. Additionally, or alternatively, the encoder may be configured according to one or more internal parameters, such as a quantization parameter, a discrete cosine transform (DCT) coefficient, a coding tree unit (CTU) block size, one or more slicing parameters, and/or the like.

When the video data is compressed, its encapsulated by a protocol, transmitted over a network, and received by a receiving device. In some examples, one or more network conditions may change, which may be reported via one or more feedback messages. For example, a feedback message may indicate a quantity of packets lost via a report link and/or that a bit rate of a video encoder should be reduced. In response to receiving the feedback message, data that has already been processed by the video encoder may be flushed, and the video encoder may then begin encoding a new input image with updated parameters set (e.g., a reduced bit rate). Such an interruption may be observed at a video receiver as a delay (e.g., as latency, as lag). This delay is undesirable and results in poor user experience for recipients of the video stream. Also, conventional techniques for switching encoder bit rate may require sending a new I-frame, which may cause a peak in bit rate and an associated delay in delivery.

In accordance with one or more examples described herein, multiple encoders may be utilized in parallel to improve communication efficiency and reduce or eliminate latency otherwise associated with conventional techniques. Additionally, the described techniques may reduce design and operational complexity, which may provide various advantages, such as improved reliability. In one example embodiment of the described techniques, multiple constant bit rate encoders may be utilized to simultaneously encode image data at different bitrates. Doing so may enable fast switching between encoders and adjustment of bit rate for an output data stream without introducing latency associated with adjusting the bit rate of a variable bit rate encoder or activating a constant bit rate encoder that has not previously been activated.

Embodiments of the present disclosure provide a myriad of technical advantages. For example, techniques of the present disclosure reduce latency of communications, thereby improving communication throughput. Additionally, or alternatively, the techniques of the present disclosure may reduce operational complexity associated with encoding. For example, the techniques of the present disclosure may eliminate the activation and/or deactivation of constant bit rate encoders in real time, which may eliminate processing overhead associated with such operations. Additionally, the techniques of the present disclosure may eliminate bit rate switching operations for variable bit rate encoders, which may also eliminate processing overhead.

In some examples, the techniques described herein may provide improvements related to operational safety of vehicles, such as aerial vehicles. For example, the fast encoder switching techniques described herein may reduce or eliminate latency associated with conventional techniques, thereby enabling vehicle operators to make operational decisions that are based on received video data more quickly and/or more effectively. For example, a vehicle operator may receive video data showing one or more obstacles and may perform one or more actions to cause the vehicle to avoid the one or more obstacles. In such an illustrative example, the ability of the operator to cause the vehicle to avoid a collision may depend on video data being received by the operator clearly and efficiently (e.g., without latency and/or buffering). Accordingly, the techniques described herein may enable the operator to avoid one or more collisions as a result of video data being communicated without latency and/or buffering.

### DEFINITIONS

In some embodiments, the term "imaging component" refers to a hardware or software component capable of generating, recording, storing, modifying, and/or processing visual information and/or visual data. For example, cameras, image buffers, and sensors may be examples of imaging components. Such imaging components may be configured to capture and/or process visual data. In some examples, an imaging component may be in communication with one or more other components of a system. In such examples, the imaging component may communicate data, such as visual data, to the one or more other components. For example, an image buffer may transmit (e.g., wirelessly and/or via one or more wired connections) data (e.g., image data) to one or more encoders, among other examples. In some examples, a first imaging component may generate or otherwise capture data for transmission to a second imaging component. For example, a camera may generate image data and transmit the image data to an image buffer (e.g., wirelessly and/or via one or more wired connections).

In some examples, a vehicle may include one or more imaging components, which may be utilized for various purposes, such as navigation, control, safety, reconnaissance, and/or the like. As one illustrative example, an unmanned aerial vehicle (UAV) may include one or more first person view (FPV) cameras, which may provide image data to an operator of the UAV in real-time. Such image data may then be utilized by the vehicle operator to control or otherwise pilot the UAV. As another illustrative example, a vehicle may be equipped with one or more thermal imaging cameras, which may detect infrared radiation emitted by objects and/or structures, such as other vehicles, stationary objects, individuals, and/or animals. Such image data may then be utilized for vehicle control, navigation, safety, reconnaissance, search and rescue operations, agricultural monitoring, firefighting, industrial inspections, and/or the like.

As described herein, an image buffer may be an example of an imaging component. An image buffer, which may additionally, or alternatively be referred to as a frame buffer, may be an example of a component configured to temporarily store image data. In some examples, an image buffer may store pixel data that comprises a frame of an image or video being displayed or communicated to one or more other components, such as an encoder. In some examples, an image buffer may be configured to modify or otherwise process image data. As described herein, a camera may transmit or otherwise communicate image data to an image buffer and the image buffer may store the image data prior to transmitting the image data to one or more encoders. In some examples, an image buffer may store and/or communicate encoding data for one or more images. For example, an image buffer may store and/or communicate YUV data for one or more images, where Y (e.g., luma) corresponds to brightness or luminance of an image, U (e.g., chrominance blue) corresponds to blue color information relative to image brightness, and V (e.g., chrominance red) corresponds to red color information relative to image brightness.

In some embodiments, the term "vehicle" refers to a mobile object or machine configured to travel or move from one location to another location. A vehicle may be propelled by a propulsion system, which may include one or more motors, one or more propeller systems, one or more rockets, and/or the like. In some examples, a vehicle may transport a payload including one or more objects and/or one or more individuals. A vehicle may be equipped with one or more control systems, such as a computing device, which may be configured to control the movement of the vehicle by communicating one or more control signals to one or more propulsion systems of the vehicle. Additionally, or alternatively, the one or more control systems may be configured to control one or more systems of the vehicle other than the one or more propulsion systems.

In some examples, a vehicle and/or a control system of a vehicle may be controlled by or may receive one or more inputs from one or more individuals, such as a pilot or a driver. In some other examples, a vehicle may be autonomous or unmanned. As described herein, a vehicle may be an aircraft, a spacecraft, a satellite, an automobile, a maritime vessel, an unmanned cargo vehicle utilized for package delivery, such as within a fulfilment or manufacturing system, and/or the like. A vehicle may be equipped with one or more systems, such as one or more computing devices. In some examples, a vehicle may communicate with one or more other vehicles and/or devices via a wireless network. For example, a computing device of a vehicle may include communication circuitry, which may enable the vehicle to wirelessly communicate with one or more other vehicles and/or computing systems, such as a ground-based communication component or device.

As described herein, a vehicle may include one or more sensors, which may be utilized to generate image data. In some examples, the image data may be representative of an environment in which the vehicle is operating and/or one or more objects within a range of the one or more sensors. In some examples, one or more vehicle control systems may utilize image data generated by the one or more sensors for control and/or navigation of the vehicle. For example, one or more vehicle control systems may be activated, deactivated, or otherwise adjusted based on the image data. In some examples, a vehicle may include one or more image encoding devices, which may be configured to encode image data. In some examples, the one or more image encoding devices may receive the image data that has not been encoded from one or more imaging components (e.g., one or more imaging components of the vehicle), encode the image data (e.g., at one or more bit rates) and communicate the image data to one or more other components, such as one or more communication components of the vehicle. The one or more communication components may then communicate the encoded image data or a portion of the encoded image data to one or more other devices and/or entities, such as a communication component of another vehicle, and/or a communication component not associated with a vehicle (e.g., a ground-based communication component).

In some embodiments, the term "image encoding device" refers to a device or entity configured to convert image data from a first format to a second format. For example, an image encoding device may be configured to convert raw image data to compressed image data. As described herein, an image encoding device may be an example of a constant bit rate image encoding device or a variable bit rate image encoding device. A constant bit rate image encoding device may be configured to compress image data at a fixed or constant bit rate, which refers to a quantity of data encoded for a given unit of time. A variable bit rate image encoding device may be configured to compress image data at a variable or dynamic bit rate. For example, a variable bit rate encoder may compress image data at a first bit rate for a duration and compress image data at second bit rate for a second duration. In some examples, a variable bit rate encoder may adjust a bit rate in response to receiving a message indicating that the bit rate should be adjusted.

Although some examples described herein refer to image encoding devices as being implemented in hardware, image encoding devices may also be implemented in software. Accordingly, any reference to an image encoding device described herein may refer to a hardware image encoding device or a software image encoding device. As one illustrative example of a software image encoding device, one or more processors may be configured to execute or otherwise cause execution of one or more algorithms that compress or otherwise encode raw image data.

As described herein, a vehicle may include one or more image encoding devices, which may be utilized to encode image data, such as vehicle-relevant image data, which may include image data generated by an imaging component of a vehicle. In some examples, a vehicle may include multiple image encoding devices, such as multiple constant bit rate image encoding devices. In such examples, different image encoding devices of the multiple image encoding devices may be configured to encode image data at different bit rates (e.g., simultaneously), which may reduce or eliminate latency otherwise associated with switching a bit rate of a variable bit rate image encoding device or activating a constant bit rate image encoding device that was not previously activated.

In some embodiments, the term "image data" refers to a digital representation of visual information, which may be generated by an imaging component, such as a camera. Image data may take on a variety of forms and/or formats, such as raw image data and compressed image data. In some examples, image data may be communicated, processed (e.g., modified), stored, and/or generated by one or more components of a vehicle. Image data may include video data and/or still image data. As described herein, image data may be segmented into portions or units, such as frames. Each frame may include a single still image.

In some embodiments, the term "frame" refers to a segmentation or unit of image data. A frame may include a single complete image including one or more pixels captured or otherwise generated at a specific time instance. In some examples, multiple frames may be displayed or communicated sequentially. When combined (e.g., displayed sequentially), multiple frames may form a video. A quantity of frames that is displayed per unit of time may be referred to as frame rate and may be indicative of video quality. In some examples, multiple frames may be communicated or displayed successively (e.g., sequentially, without intervening pauses or time gaps between frames).

In some embodiments, the term "bit rate" refers to a speed at which data, such as image data, is processed (e.g., encoded) and/or communicated. In some examples, bit rate may be expressed as a quantity of bits per a given unit of time, such as bits per second. As described herein, an image encoding device may be configured to encode image data at one or more bit rates. In some examples, a bit rate may be indicative of or otherwise correspond to processing speed and/or available bandwidth for a given wireless connection. For example, bit rate for data communications may be adjusted based on available bandwidth.

In some embodiments, the term "communication component" refers to a device or circuitry configured to communicate or otherwise cause communication of data with one or more other devices or components. For example, communication circuitry, such as a transmitter, a receiver, and/or a transceiver may be an example of a communication component. In some examples, a vehicle may include one or more communication components, which may be utilized to communicate data, such as image data, with one or more other communication components. For example, a communication component of a vehicle may receive image data from one or more encoders and may communicate the image data to a ground-based communication component, such as a receiving device of a vehicle control system. Additionally, or alternatively, a communication component of a vehicle may receive data, such as one or more feedback messages, from one or more other communication components. For example, the ground-based communication component may transmit a feedback message to a communication component of a vehicle. The feedback message may indicate one or more quality metrics indicative of data quality for received data. As described herein, the terms "communication component," "communication device," "communication circuitry," and "communication entity" may be used interchangeably without loss of meaning to refer to any entity capable of communicating information.

In some embodiments, the term "feedback message" refers to a communication of information that is indicative of a status, quality metric, and/or outcome associated with a prior communication and/or prior event. For example, a first communication device may transmit a feedback message to a second communication device. The feedback message may indicate a packet error rate for a communication previously transmitted from the second communication device to the first communication device. In some examples, the second communication device may receive the feedback message and modify one or more communication parameters, which may improve the packet error rate for future communications between the first communication device and the second communication device.

In some examples, a bit rate of an image encoding device may be modified or otherwise configured based on information communicated in a feedback message. In some other examples, an image encoding device with a specific bit rate may be selected from a set of image encoding devices (e.g., a set of constant bit rate encoders) based on information communicated in a feedback message. In such examples, data output by (e.g., encoded by) the selected image encoding device may be selected for communication to one or more communication devices based on information communicated in a feedback message. For example, image data encoded by a first image encoding device at a first bit rate may be communicated to a ground-based computing entity. The ground-based computing entity may determine a quality metric for the image data and communicate the quality metric to one or more processors associated with the first image encoding device. The one or more processors may determine that the quality metric satisfies a threshold quality metric (e.g., the quality metric is below a threshold quality metric) and determine to cease communication of the image data encoded at the first bit rate based on the quality metric satisfying the threshold. Additionally, or alternatively, the one or more processors may determine to output or otherwise communicate image data encoded at a second bit rate by a second image encoding device based on the quality metric satisfying the threshold.

In some embodiments, the term "quality metric" refers to an indicator or measurement of quality. In some examples, a quality metric may indicate a quality of image data or an extent to which image data is effectively and/or efficiently communicated over a wireless network. Some non-limiting examples of quality metrics include packet error rate, resolution, frame rate, bit rate, compression efficiency, color depth, color accuracy, signal-to-noise ratio, audio quality, and/or the like. A quality metric may be represented or otherwise indicated by a value, which may be included in a message, such as a feedback message. In some examples, image data encoded at specific bit rates may be communicated based on a quality metric for the image data. For example, image data encoded at a first bit rate may be transmitted or otherwise displayed until a feedback message is received indicating a quality metric, which may inform a decision to transmit or otherwise display image data encoded at a second bit rate to improve the quality metric.

In some embodiments, the term "successive" refers to a sequential or incremental progression of events, actions, or data units occurring in a continuous manner during a time period. For example, image data or subdivisions of image data, such as frames, may be communicated and/or displayed in a successive manner. In such examples, frames may be communicated without intervening gaps or time intervals greater than a threshold time interval. For example, a second frame may occur or may otherwise be communicated directly after a first frame. In some examples, the term "successive" may refer to a communication of two or more frames without delay or latency (e.g., a time gap between frames does not exceed a threshold delay or latency).

In some embodiments, the term "packet error rate" refers to a quality metric used to quantify a frequency or probability of errors occurring in data packets transmitted over a communication channel or network. In some examples, packet error rate may represent a ratio of incorrectly received packets to a total quantity of packets transmitted. Packet error rate may be expressed as a fraction or a percentage and may be included in a feedback message. As described herein, a first communication device may communicate a feedback message including an indication of a packet error rate to a second communication device. The second communication device may then transmit the packet error rate to one or more processors, which may determine to modify a communication configuration (e.g., to switch from a first image encoding device to a second image encoding device) based on the packet error rate.

In some embodiments, the term "satellite communication link" refers to a type of communication link, which may be established between communication devices for the purpose of communicating information. In some examples, a satellite communication link may correspond to or otherwise be associated with a specific communication channel over which data may be communicated. A satellite communication link may enable a first terrestrial-based communication device (e.g., a ground-based communication device or an aerial communication device, such as a communication device of an aircraft) to communicate with a second terrestrial-based communication device via one or more satellites that serve to relay the communications. For example, a first communication device (e.g., a smartphone) may transmit a data communication to a satellite, which may relay the data communication to a second communication device (e.g., a smartphone).

Communicating via a satellite communication link may provide several advantages when compared to communications utilizing other types of communication links. For example, satellite communication links may provide larger coverage areas and extended communication range when compared to terrestrial-based communication links. Additionally, or alternatively, satellite communication links may provide increased bandwidth when compared to terrestrial-based communication links.

In some embodiments, the term "continuous" refers to an uninterrupted or ongoing process or action. For example, one or more image encoding devices may be configured to operate or otherwise encode data continuously. In such examples, multiple image encoding devices may be activated and may continue to operate continuously without consideration for whether encoded data is transmitted or not. For example, a first image encoding device may continuously encode data at a first bit rate and a second image encoding device may continuously encode data at second bit rate (e.g., when data is provided to the image encoding devices), even if only the data encoded at the first bit rate is transmitted or otherwise utilized. Such continuous operation of multiple encoders may enable an output data stream to be switched or modified without introducing latency otherwise associated with activating image encoding devices or switching a bit rate of a variable bit rate encoding device. For example, a first quantity of frames encoded by a first image encoding device may be transmitted for a first duration and a second quantity of frames encoded by a second image encoding device may be transmitted for a second duration that is successive to the first duration. Thus, no delay or latency is introduced between the first quantity of frames and the second quantity of frames.

In some embodiments, the term "ground-based communication component" refers to a communication component or communication device that is located at a ground-based location. For example, a control center or control system for a UAV may include one or more ground-based communication components, which may receive communications from and transmit communications to the UAV. In some examples, a ground-based communication component may be stationary. In some other examples, a ground-based communication component may be mobile. For example, a ground-based vehicle, such as an automobile may include a ground-based communication component.

### EXAMPLE SYSTEMS AND PROCESSES OF THE DISCLOSURE

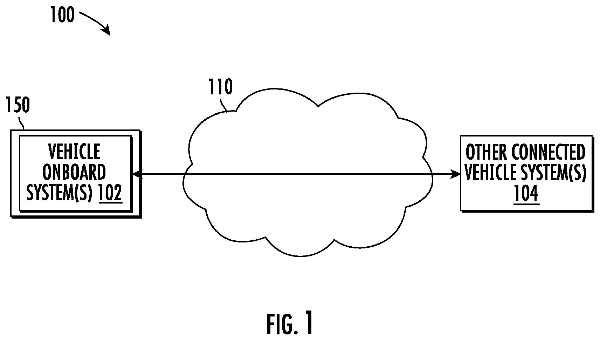

FIG. 1 illustrates a system for fast encoder switching in accordance with one or more embodiments of the present disclosure. Specifically, FIG. 1 depicts an example system 100 within which embodiments of the present disclosure may operate to perform fast encoder switching as described herein. As depicted, the system 100 includes one or more vehicle onboard systems 102, for example, which embody one or more systems of a vehicle 150. In some embodiments, the one or more vehicle onboard systems 102 are optionally communicable with one or more other computing devices and/or systems, such as one or more other connected vehicle systems 104 (e.g., one or more ground-based communication components, one or more cloud-based communication components). In some embodiments, the one or more vehicle onboard systems 102 are communicable with one or more other connected vehicle systems 104 over one or more communication networks, such as the communications network 110.

In some embodiments, the one or more vehicle onboard systems 102 include any number of computing devices, entities, and/or systems embodied in hardware, software, firmware, and/or a combination thereof that control, operate, and/or are onboard a vehicle 150. In some examples, the one or more vehicle onboard systems may include one or more encoders, one or more imaging components, one or more communication components, and/or the like. Additionally, or alternatively, the one or more vehicle onboard systems 102 may include one or more physical components of the vehicle 150, including and without limitation one or more displays, one or more flight management systems, one or more engines, one or more wings, one or more props, one or more motors, one or more antennas, one or more landing gear assemblies, and/or the like. In some embodiments, the one or more vehicle onboard systems 102 include one or more sensors (e.g., one or more cameras, one or more sensors of a camera) that gather, collect, and/or otherwise aggregate flight sensor data associated with a vehicle 150 and/or an environment associated therewith. Additionally, or alternatively, in some embodiments, the one or more vehicle onboard systems 102 include one or more computing devices and/or systems embodied in hardware, software, firmware, and/or a combination thereof, that control operation of one or more physical components of the vehicle 150, including and without limitation, one or more displays, one or more flight management systems, one or more engines, one or more wings, one or more props, one or more landing gear assemblies, one or more sensors, and/or the like. Additionally, or alternatively, in some embodiments, the one or more vehicle onboard systems 102 include one or more computing devices and/or systems embodied in hardware, software, firmware, and/or any combination thereof, that generate one or more user interfaces capable of being rendered to one or more displays of the one or more vehicle onboard systems 102. Additionally, or alternatively, in some embodiments, the one or more vehicle onboard systems 102 include one or more computing devices and/or systems embodied in hardware, software, firmware, and/or any combination thereof, that generates and/or maintains data embodying and/or utilized to recreate a virtual environment including virtual aspects corresponding to and/or associated with a real-world environment and/or a virtual vehicle corresponding to the actual vehicle. It will be appreciated that the vehicle 150 may include any number of physical components that enable the vehicle 150 to operate in a particular manner of airborne, space, aquatic, and/or ground-based travel.

In some embodiments, the one or more vehicle onboard systems 102 include one or more personal computers, one or more end-user terminals, one or more monitors, and/or one or more displays. Additionally, or alternatively, in some embodiments, the one or more vehicle onboard systems 102 include one or more data repositories embodied in hardware, software, firmware, and/or any combination thereof to support functionality provided by one or more computing devices of the one or more vehicle onboard systems 102. In some embodiments the one or more vehicle onboard systems 102 include one or more specially configured integrated systems that process data received by and/or controlled by one or more other computing devices and/or systems of the one or more vehicle onboard systems 102.

The one or more other connected vehicle systems 104 include one or more computing devices, systems, and/or onboard systems of one or more other vehicles communicatively coupled with the vehicle 150. It will be appreciated that the one or more other connected vehicle systems 104 in some embodiments include one or more computing devices and/or one or more systems of one or more other vehicles of the same type operating within the same environment as the vehicle 150. For example, in some embodiments some of the other connected vehicle systems 104 include one or more computing devices and/or systems of one or more other vehicles in a fleet of a particular type of vehicle. Additionally, or alternatively, in some embodiments, the one or more other connected vehicle systems 104 include one or more computing devices and/or systems of one or more ground vehicles, one or more other types of vehicles, and/or the like.

In some embodiments, the one or more vehicle onboard systems 102 receive data from one or more of the other connected vehicle systems 104 that provides additional context with respect to the environment in which the vehicle 150 is operating. For example, in some embodiments, the one or more vehicle onboard systems 102 communicate with one or more other connected vehicle systems 104 to determine a position of one or more other vehicles, objects, environmental features (e.g., buildings, terrain, and/or the like) within the environment of the vehicle 150. Additionally, or alternatively, in some embodiments, the one or more vehicle onboard systems 102 communicate with one or more of the other connected vehicle systems 104 to receive flight sensor data of a particular data type that is not capturable directly by the one or more vehicle onboard systems 102. For example, in some embodiments, the vehicle 150 does not include a particular sensor for capturing a particular type of data, and instead receives such data of the particular data type from the one or more other connected vehicle systems 104.

In some embodiments, the one or more vehicle onboard systems 102 may include one or more flight management systems, which may themselves include one or more computing devices embodied in hardware, software, firmware, and/or the like that generate, assign, and/or maintain flight plan information and/or other flight detail data for the vehicle 150 and/or one or more other vehicles. For example, in some embodiments, the one or more flight management systems include one or more computing devices and/or systems of an air traffic control (ATC) system and/or other authoritative entity that assigns flight detail data (e.g., one or more particular flight plans and/or information associated therewith) to one or more vehicles 150. Such information may include, without limitation, flight detail data embodying a visual flight rules (VFR) flight plan, an instrument flight rules (IFR) flight plan, a composite flight plan, and/or the like defining conditions for operating a vehicle 150 within a particular environment.

In some embodiments, the one or more flight management systems include one or more application servers, one or more end user terminals, one or more personal computers, one or more mobile devices, one or more user devices, and/or the like that generate, assign, and/or transmit flight detail data to one or more vehicles 150. Additionally, or alternatively, in some embodiments, the one or more flight management systems may include one or more data repositories embodied in hardware, software, firmware, and/or a combination thereof, that store flight detail data, links between flight detail data and one or more particular vehicle 150, and/or the like. Additionally, or alternatively, in some embodiments, the one or more flight management systems include one or more computing devices and/or systems that detect and/or monitor operation of one or more vehicles 150 within an environment. For example, in some embodiments, the one or more flight management systems include one or more radar systems that monitor the position of one or more vehicles 150 within a particular portion of an environment.

In some embodiments, the one or more other connected vehicle systems 104 may be examples of systems and/or devices capable of communicating or otherwise sharing data with the one or more vehicle onboard systems 102. In some examples, the one or more other connected vehicle systems 104 may generate data. That is, data may originate from the one or more other connected vehicle systems 104. Additionally, or alternatively, the one or more other connected vehicle systems 104 may receive data that originates from one or more other sources and communicate or otherwise relay the data to one or more devices. The one or more other connected vehicle systems 104 may include one or more data storage systems, such as volatile or non-volatile memory devices. Some illustrative examples of one or more other connected vehicle systems 104 may include other vehicles, weather monitoring systems, ATC systems, and/or the like.

The one or more other connected vehicle systems 104 may include one or more computing devices and/or systems that store and/or generate data. In some examples, the data may represent one or more aspects of a real-world environment, object therein, and/or vehicle 150 therein. In some embodiments, the one or more other connected vehicle systems 104 include one or more data repositories that store data embodying terrain of a particular environment. Additionally, or alternatively, in some embodiments, the one or more other connected vehicle systems 104 include one or more data repositories that store data embodying one or more buildings, one or more objects and/or one or more other features within the environment that one or more vehicles 150 in the environment is to avoid or interact with (e.g., for takeoff and/or landing). In some embodiments, the one or more other connected vehicle systems 104 embody a subsystem of the one or more flight management systems and/or the one or more vehicle onboard systems 102. In some embodiments, the one or more other connected vehicle systems 104 include a cityscape obstacle database, a vertiport database (e.g., including locations, dimensions, and/or other characteristic of one or more landing zones), and/or the like.

In some embodiments, the one or more other connected vehicle systems 104 include one or more application servers, one or more end user terminals, one or more personal computers, one or more mobile devices, one or more user devices, and/or the like. Additionally, or alternatively, in some embodiments, the one or more other connected vehicle systems 104 include one or more database server specially configured to store data pushed from one or more other computing devices and/or systems (e.g., the one or more vehicle onboard systems 102, one or more flight management systems, and/or the like) and/or retrieve data in response to one or more queries from one or more other computing devices and/or systems. In some embodiments, the one or more other connected vehicle systems 104 include one or more remote and/or cloud computing devices accessible to the one or more vehicle onboard systems 102 and/or one or more flight management systems over a communications network, such as the communications network 110.

In some embodiments the communications network 110 enables communication between the various computing devices and/or systems utilizing one or more combinations of wireless and/or wired data transmissions and protocols. In this regard, the communications network 110 may embody any of a myriad of network configurations. In some embodiments, the communications network 110 embodies a public network (e.g., the internet) in whole or in part. In some embodiments, the communications network 110 embodies a private network (e.g., an internal network between particular computing devices) in whole or in part. Additionally, or alternatively, in some embodiments the communications network 110 embodies a direct or private connection facilitated over satellite and/or radio systems that enable long-range communication between the vehicle 150 and corresponding grounded systems. In some other embodiments, the communications network 110 embodies a hybrid network (e.g., a network enabling internal communications between connected computing devices and external communications with other computing devices).

The communications network 110 may include one or more base stations, one or more relays, one or more routers, one or more switches, one or more cell towers, one or more communications cables, one or more satellites, one or more radio antennas, and/or one or more related control systems and/or associated routing stations. In some embodiments, the communications network 110 includes one or more user entity-controlled computing devices and/or other enterprise devices (e.g., an end-user or enterprise router, modem, switch, and/or other network access point) and/or one or more external utility devices (e.g., one or more internet service provider communication towers, one or more cell towers, and/or one or more other devices). In some embodiments, the one or more vehicle onboard systems 102 communicate with the one or more other connected vehicle systems 104 over the communications network 110 to receive and/or transmit encoded image data and/or feedback messages as described herein.

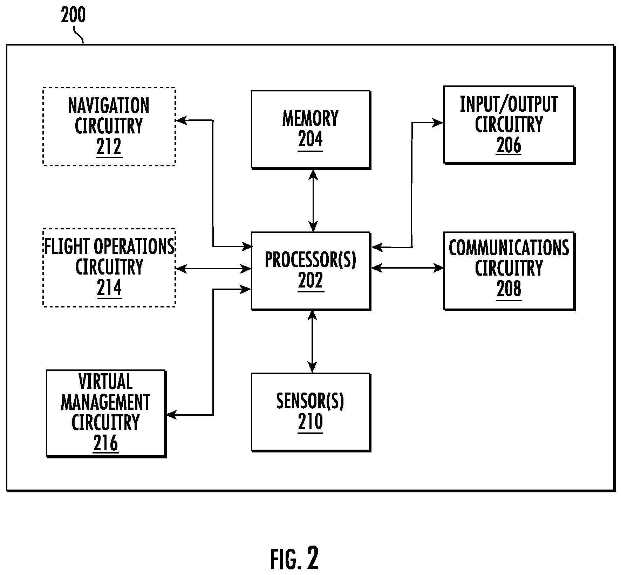

FIG. 2 illustrates a block diagram of a computing device for fast encoder switching in accordance with one or more embodiments of the present disclosure. Specifically, FIG. 2 depicts a computing device 200. In some embodiments, the one or more vehicle onboard systems 102 described with reference to FIG. 1 may include one or more computing devices 200. As depicted, the computing device 200 includes one or more processors 202, one or more memories 204, input/output circuitry 206, communications circuitry 208, one or more sensors 210, navigation circuitry 212, flight operations circuitry 214, and/or virtual management circuitry 216. In some such embodiments, the navigation circuitry 212 and/or the flight operations circuitry 214 is/are optional.

In some embodiments, the computing device 200 is configured, using one or more of the sets of circuitry embodying the processor 202, the memory 204, the input/output circuitry 206, the communications circuitry 208, the one or more sensors 210, the navigation circuitry 212, the flight operations circuitry 214, and/or the virtual management circuitry 216, to execute the operations described herein. For example, the one or more processors 202 may be examples of one or more encoders, and/or may be configured to encode image data by executing one or more algorithms. Additionally, or alternatively, the one or more sensors 210 may be examples of one or more imaging components, such as one or more cameras, which may be configured to capture the image data and communicate the image data to the one or more processors. In some examples, the one or more processors may communicate encoded image data to the communications circuitry 208 and the communication circuitry 208 may selectively communicate at least a portion of the encoded image data to one or more other devices (e.g., based on control signaling received from the one or more processors 202).

Although components are described with respect to functional limitations, the particular implementations necessarily include the user of the particular computing hardware. It should also be understood that in some embodiments certain components described herein include similar or common hardware. For example, two sets of circuitry may both leverage use of the same processor, network interface, storage medium, and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the computing device 200 provide or supplement the functionality of another particular set of circuitry. For example, the processor 202 in some embodiments provides processing functionality to any of the other sets of circuitry, the memory 204 provides storage functionality to any of other the sets of circuitry, the communications circuitry 208 provides network interface functionality to any of the other sets of circuitry, and/or the like.

In some embodiments, the processor 202 (and/or co-processor or any other processing circuitry assisting or otherwise associated with the processor) is/are in communication with the memory 204 via a bus for passing information among components of the computing device 200. In some embodiments, for example, the memory 204 is non-transitory and includes, for example, one or more volatile and/or non-volatile memories. In other words, for example, the memory 204 may include or embody an electronic storage device (e.g., a computer readable storage medium). In some embodiments, the memory 204 is configured to store information, data, content, applications, instructions, or the like, for enabling the computing device 200 to carry out various functions in accordance with example embodiments of the present disclosure.

In various embodiments, the processor 202 is embodied in a number of different ways. For example, in some example embodiments, the processor 202 includes one or more processing devices configured to operate independently. Additionally, or alternatively, in some embodiments, the processor 202 includes a processor configured in tandem via a bus to enable independent execution of instructions, pipelining, and/or multithreading. The use of the terms "processor" and "processing circuitry" should be understood to include a single core processor, a multi-core processor, multiple processors internal to the computing device 200, and/or one or more remote or cloud-based processors external to the computing device 200.

In an example embodiment, the processor 202 is configured to execute instructions stored in the memory 204 or otherwise accessible to the processor 202. Additionally, or alternatively, the processor 202 may be configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Additionally, or alternatively, as another example, when the processor 202 is embodied as an executor of software instructions, the instructions specifically configure the processor 202 to perform the algorithms embodied in the specific operations described herein when such instructions are executed.

As one particular example embodiment, the processor 202 is configured to perform various operations associated with fast encoder switching, for example, as described with respect to one or more vehicle onboard systems 102. In some embodiments, the processor 202 includes hardware, software, firmware, and/or a combination thereof, that generates or receives image data corresponding to a real-world environment associated with a particular vehicle. In some embodiments, the processor 202 includes hardware, software, firmware, and/or a combination thereof, that simultaneously encodes the image data at different bit rates. For example, the processor 202 may include or may otherwise be in communication with two or more constant bit rate encoders that simultaneously encode the image data at different bit rates.

In some embodiments, computing device 200 includes input/output circuitry 206 and/or communications circuitry 208 that provides output to a user and, in some embodiments, transmits encoded image data to one or more other devices. In some embodiments, the input/output circuitry 206 and/or the communications circuitry 208 is/are in communication with the processor 202 to provide such functionality. The input/output circuitry 206 may comprise one or more user interfaces and in some embodiments includes one or more displays that comprise the one or more interfaces rendered as a web user interface, an application user interface, a user device, a backend system, or the like. In some embodiments, the input/output circuitry 206 also includes a keyboard, a mouse, a joystick, a touch screen, touch areas, soft keys, a microphone, a speaker, or other input/output mechanisms. The processor 202, and/or input/output circuitry 206 comprising a processor, in some embodiments is configured to control one or more functions of one or more user interface elements through computer program instructions (e.g., software and/or firmware) stored on a memory accessible to the processor 202 (e.g., memory 204, and/or the like). In some embodiments, the input/output circuitry 206 includes or utilizes a user-facing application to provide input/output functionality to a service maintainer device and/or other display associated with a user.

The communications circuitry 208 includes any means such as a device or circuitry embodied in either hardware or a combination of hardware and software that is configured to receive and/or transmit data from/to a communications network and/or any other computing device, circuitry, or module in communication with the computing device 200. In this regard, the communications circuitry 208 includes, for example in some embodiments, a network interface for enabling communications with a wired or wireless communications network. Additionally, or alternatively in some embodiments, the communications circuitry 208 includes one or more network interface cards, one or more antennas, one or more busses, one or more switches, one or more routers, one or more modems, and supporting hardware, firmware, and/or software, or any other device suitable for enabling communications via one or more communication networks. Additionally, or alternatively, the communications circuitry 208 includes circuitry for interacting with the one or more antennas and/or other hardware or software to cause transmission of signals via the one or more antennas or to handle receipt of signals received via the one or more antennas. In some embodiments, the communications circuitry 208 enables transmission to and/or receipt of data from one or more computing devices and/or systems of one or more other connected vehicle systems 104 and/or one or more flight management systems in communication with the computing device 200.

The one or more sensors 210 include hardware, software, firmware, and/or a combination thereof, that supports generation, capturing, aggregating, retrieval, and/or receiving of one or more portions of data, such as flight sensor data and/or image data. In some embodiments, the one or more sensors 210 include one or more components of a vehicle. The one or more sensors 210 in some embodiments are affixed to, within, and/or otherwise a part of a vehicle including or otherwise associated with the computing device 200. For example, in some embodiments, one or more of the sensors 210 are mounted to the vehicle. Non-limiting examples of sensors 210 include altimeters (e.g., radio and/or barometric), pressure sensors, pitot tubes, anemometers, image cameras, video cameras, infrared sensors, and/or the like. Additionally, or alternatively, in some embodiments, the one or more sensors 210 include one or more communication systems that enable aggregation of one or more portions of flight sensor data from one or more external computing devices and/or systems communicable with the computing device 200, for example one or more other connected vehicle systems 104 and/or one or more flight management systems. In some embodiments, the one or more sensors 210 include any of a myriad of sensors conventionally associated with drones, helicopters, and/or other urban air mobility vehicles. Additionally, or alternatively, in some embodiments, the one or more sensors 210 include one or more high-sensitivity sensors to facilitate and/or enable high accuracy capturing of data in certain circumstances. For example, in some embodiments, the one or more sensors 210 include one or more high-sensitivity altimeters that capture detailed altitude information within a few feet (e.g., within tens of feet) from a landing zone. In this regard, such high-sensitivity sensors in some embodiments provide higher-accuracy data when a vehicle is close to a landing zone, where such higher-accuracy data is utilized in depicting accurate positioning of a virtual vehicle corresponding to the vehicle within a virtual environment with respect to a virtual representation of the landing zone and/or a virtual corridor.

In some embodiments, the one or more sensors 210 include hardware, software, firmware, and/or a combination thereof, embodying one or more navigation sensors. In some embodiments, the one or more navigation sensors include a global positioning satellite (GPS) tracking chip and/or the like enabling location services to be requested and/or determined for a particular vehicle. Additionally, or alternatively, in some embodiments, the one or more sensors 210 include hardware, software, firmware, and/or any combination thereof, embodying one or more inertial navigation sensors that measure speed, acceleration, orientation, and/or position-related data in a 3D environment. Additionally, or alternatively, in some embodiments, the one or more sensors 210 include one or more cameras associated with a synthetic vision system (SVS). In some such embodiments, such an SVS camera captures image data representations of the real-world environment around a vehicle for use in generating one or more corresponding user interface depicting the captured image data, augmenting such image data, and/or otherwise providing data to enable an operator to acquire situational awareness based at least in part on the captured image data. It will be appreciated that, in some embodiments, the one or more sensors 210 include a separate processor, specially configured field programmable gate array (FPGA), or a specially programmed application specific integrated circuit (ASIC).

The navigation circuitry 212, which may optionally be included, includes hardware, software, firmware, and/or a combination thereof, that supports various functionality associated with navigating a vehicle. In some embodiments, navigation circuitry 212 includes hardware, software, firmware, and/or a combination thereof, that receives flight plan data, location service data representing a location of the vehicle, and/or the like. Additionally, or alternatively, in some embodiments, the navigation circuitry 212 includes hardware, software, firmware, and/or a combination thereof, that determines a location of a landing zone from which a vehicle is taking off and/or where a vehicle is landing. Additionally, or alternatively, in some embodiments, the navigation circuitry 212 includes hardware, software, firmware, and/or a combination thereof, that determines a location along a flight path at which a vehicle is to switch operational mode (e.g., to initiate change to and/or from a vertical landing mode and/or vertical takeoff mode). It will be appreciated that, in some embodiments, navigation circuitry 212 includes a separate processor, specially configured FPGA, or a specially programmed ASIC.

The flight operations circuitry 214, which may optionally be included, includes hardware, software, firmware, and/or a combination thereof, that supports various functionality associated with controlling a vehicle. In some embodiments, the flight operations circuitry 214 includes hardware, software, firmware, and/or a combination thereof, that autonomously control one or more components of a vehicle to facilitate movement of the vehicle along a particular flight path. Additionally, or alternatively, in some embodiments, the flight operations circuitry 214 includes hardware, software, firmware, and/or a combination thereof, that semi-autonomously control one or more components of a vehicle, for example where certain aspects of the operation of the vehicle are autonomously performed and others (e.g., directional control) is/are controlled by a user (e.g., a pilot). Additionally, or alternatively, in some embodiments, the flight operations circuitry 214 includes hardware, software, firmware, and/or a combination thereof, that receives pilot input for controlling one or more components of a vehicle, for example via vehicle flight controls to alter speed and/or direction of the vehicle. Additionally, or alternatively, in some embodiments, the flight operations circuitry 214 includes hardware, software, firmware, and/or a combination thereof, that causes changes to an operational mode of a vehicle, for example autonomously based at least in part on one or more data-driven events and/or triggers, or in response to user input initiating the change in operational mode. It will be appreciated that, in some embodiments, the flight operations circuitry 214 includes a separate processor, specially configured FPGA, or a specially programmed ASIC.

The virtual management circuitry 216 includes hardware, software, firmware, and/or a combination thereof, that supports various functionality associated with generating and/or maintaining one or more virtual elements and/or outputting one or more urban air mobility (UAM) visualization interfaces embodying one or more views of one or more virtual elements. In some embodiments, the virtual management circuitry 216 includes hardware, software, firmware, and/or a combination thereof, that generates a virtual environment based at least in part on flight sensor data. Additionally, or alternatively, in some embodiments, the virtual management circuitry 216 includes hardware, software, firmware, and/or a combination thereof, that generates a virtual vehicle based at least in part on flight sensor data, the virtual vehicle corresponding to a vehicle in a real-world environment. Additionally, or alternatively, in some embodiments, the virtual management circuitry 216 includes hardware, software, firmware, and/or a combination thereof, that generates a virtual corridor based at least in part on flight sensor data. Additionally, or alternatively, in some embodiments, the virtual management circuitry 216 includes hardware, software, firmware, and/or a combination thereof, that maintains one or more virtual elements (e.g., a virtual environment, virtual vehicle, virtual corridor, and/or the like) as new data is received. For example, in some embodiments, the virtual management circuitry 216 updates a speed, direction, velocity, altitude, and/or other data value associated with a virtual vehicle in a virtual environment as updated flight sensor data associated with a corresponding vehicle is received. Additionally, or alternatively, in some embodiments, the virtual management circuitry 216 includes hardware, software, firmware, and/or a combination thereof, that outputs data embodying a UAM visualization interface from a particular view with respect to the virtual vehicle, for example a profile view, an exocentric view, and/or an egocentric view.

In some embodiments, the virtual management circuitry 216 includes hardware, software, firmware, and/or any combination thereof, that generates one or more user interface elements and/or otherwise causes rendering of one or more user interfaces including one or more specially configured user interface elements. For example, in some embodiments, the virtual management circuitry 216 includes hardware, software, firmware, and/or a combination thereof that generates one or more virtual elements to be depicted via a UAM visualization interface. For example, in some embodiments, the virtual management circuitry 216 generates a UAM visualization interface depicting a virtual corridor, with or without reliance on maintaining a virtual environment. In some embodiments, the virtual management circuitry 216 includes a graphics processor that generates one or more specially configured virtual user interface elements (e.g., a representation of a virtual corridor) based at least in part on flight sensor data, and/or generating sub-interfaces including some or all of such virtual user interface elements and/or other interface elements. Additionally, or alternatively, in some embodiments, the virtual management circuitry 216 includes one or more displays embodied in hardware, software, firmware, and/or a combination thereof, that render one or more user interfaces and/or elements thereof. It will be appreciated that, in some embodiments, virtual management circuitry 216 includes a separate processor, specially configured FPGA, or a specially programmed ASIC.

It will be appreciated that, in some embodiments, two or more of the sets of circuitries 202-216 are combinable. Additionally, or alternatively, in some embodiments, one or more of the sets of circuitry 202-216 perform some or all of the functionality described associated with another component. For example, in some embodiments, one or more of the sets of circuitry 202-216 are combined into a single component embodied in hardware, software, firmware, and/or a combination thereof. For example, in some embodiments, two or more of the navigation circuitry 212, flight operations circuitry 214, and/or virtual management circuitry 216 are embodied by a single set of circuitry that performs the combined operations of the individual sets of circuitry. Similarly, in some embodiments, one or more of the sets of circuitry, for example navigation circuitry 212, flight operations circuitry 214, and/or virtual management circuitry 216, is/are combined with the processor 202, such that the processor 202 performs one or more of the operations described above with respect to each of these other sets of circuitry.

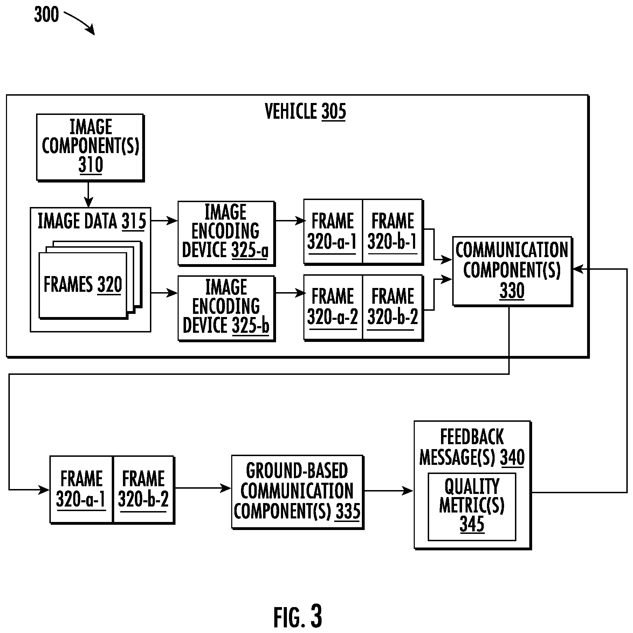

FIG. 3 is a dataflow diagram 300 showing example data structures and associated devices for fast encoder switching in accordance with one or more embodiments of the present disclosure. The dataflow diagram 300 illustrates data structures and associated devices for communicating encoded image data using multiple image encoding devices 325, where each image encoding device 325 is configured to encode image data 315 at a different bit rate. The data flow diagram 300 may include a vehicle 305, which may be an example of a vehicle 150, as described with reference to FIG. 1. Additionally, or alternatively, the data flow diagram 300 may include one or more components, which may be examples of one or more vehicle onboard systems 102, as described with reference to FIG. 1.

As described herein, the encoded data stream that is output by the vehicle 305 (e.g., the communication component 330) may include one or more frames 320 encoded by multiple image encoding devices 325. Additionally, the multiple image encoding devices 325 may be configured to operate (e.g., encode image data 315) simultaneously, which may enable a bit rate of image data 315 output by the one or more communication components 330 to be switched without activating, deactivating, or modifying any of the multiple image encoding devices 325, thereby reducing or eliminating latency.

In some examples, image data 315 including a plurality of frames 320 may be generated, captured, or otherwise recorded by one or more imaging components 310. The one or more imaging components 310 may then transmit the image data 315 to a plurality of image encoding devices 325. In some embodiments, an imaging component 310 is a hardware or software component capable of generating, recording, storing, modifying, and/or processing visual information and/or visual data, such as image data 315. For example, cameras, image buffers, and sensors may be examples of imaging components 310. Such imaging components 310 may be configured to capture and/or process visual data (e.g., image data 315). In some examples, an imaging component 310 may be in communication with one or more other components of a system (e.g., of a vehicle 305). In such examples, the imaging component 310 may communicate data, such as image data 315, to the one or more other components. For example, an image buffer may transmit (e.g., wirelessly and/or via one or more wired connections) data (e.g., image data 315) to one or more image encoding devices 325 (e.g., encoders, codecs), among other examples. In some examples, a first imaging component 310 may generate or otherwise capture data for transmission to a second imaging component 310. For example, a camera may generate image data 315 and transmit the image data 315 to an image buffer (e.g., wirelessly and/or via one or more wired connections).

In some examples, a vehicle 305 may include one or more imaging components 310, which may be utilized for various purposes, such as navigation, control, safety, reconnaissance, and/or the like. As one illustrative example, a UAV may include one or more FPV cameras, which may provide image data 315 to an operator of the UAV in real-time. Such image data 315 may then be utilized by the vehicle 305 operator to control or otherwise pilot the UAV. As another illustrative example, a vehicle 305 may be equipped with one or more thermal imaging cameras, which may detect infrared radiation emitted by objects and/or structures, such as other vehicles, stationary objects, individuals, and/or animals. Such image data 315 may then be utilized for vehicle control, navigation, safety, reconnaissance, search and rescue operations, agricultural monitoring, firefighting, industrial inspections, and/or the like.

As described herein, an image buffer may be an example of an imaging component 310. An image buffer, which may additionally, or alternatively be referred to as a frame buffer, may be an example of a component configured to temporarily store image data 315. In some examples, an image buffer may store pixel data that includes a frame 320 of an image or a video being displayed or communicated to one or more other components, such as one or more image encoding devices 325. In some examples, an image buffer may be configured to modify or otherwise process image data 315. As described herein, a camera may transmit or otherwise communicate image data 315 to an image buffer and the image buffer may store the image data 315 prior to transmitting the image data 315 to one or more image encoding devices 325. In some examples, an image buffer may store and/or communicate encoding data for one or more images. For example, an image buffer may store and/or communicate YUV data for one or more images, where Y (e.g., luma) corresponds to brightness or luminance of an image, U (e.g., chrominance blue) corresponds to blue color information relative to image brightness, and V (e.g., chrominance red) corresponds to red color information relative to image brightness.

In some embodiments, a vehicle 305 is a mobile object or machine configured to travel or move from one location to another location. A vehicle 305 may be propelled by a propulsion system, which may include one or more motors, one or more propeller systems, one or more rockets, and/or the like. In some examples, a vehicle 305 may transport a payload including one or more objects and/or one or more individuals. A vehicle 305 may be equipped with one or more control systems, such as a computing device, which may be configured to control the movement of the vehicle 305 by communicating one or more control signals to one or more propulsion systems of the vehicle 305. Additionally, or alternatively, the one or more control systems may be configured to control one or more systems of the vehicle 305 other than the one or more propulsion systems.

In some examples, a vehicle 305 and/or a control system of a vehicle 305 may be controlled by or may receive one or more inputs from one or more individuals, such as a pilot or a driver. In some other examples, a vehicle 305 may be autonomous or unmanned. As described herein, a vehicle 305 may be an aircraft, a spacecraft, a satellite, an automobile, a maritime vessel, an unmanned cargo vehicle utilized for package delivery, such as within a fulfilment or manufacturing system, and/or the like. A vehicle 305 may be equipped with one or more systems, such as one or more computing devices. In some examples, a vehicle 305 may communicate with one or more other vehicles and/or devices via a wireless network. For example, a computing device of a vehicle 305 may include communication circuitry, which may enable the vehicle 305 to wirelessly communicate with one or more other vehicles and/or computing systems, such as a ground-based communication component 335 or device.

As described herein, a vehicle 305 may include one or more sensors (e.g., imaging components 310), which may be utilized to generate image data 315. In some examples, the image data 315 may be representative of an environment in which the vehicle 305 is operating and/or one or more objects within a range of the one or more sensors. In some examples, one or more vehicle control systems may utilize image data 315 generated by the one or more sensors for control and/or navigation of the vehicle 305. For example, one or more vehicle control systems may be activated, deactivated, or otherwise adjusted based on the image data 315. In some examples, a vehicle 305 may include one or more image encoding devices 325, which may be configured to encode image data 315. In some examples, the one or more image encoding devices 325 may receive the image data 315 that has not been encoded from one or more imaging components 310 (e.g., one or more imaging components 310 of the vehicle 305), encode the image data 315 (e.g., at one or more bit rates) and communicate the image data 315 to one or more other components, such as one or more communication components 330 of the vehicle 305. The one or more communication components 330 may then communicate the encoded image data 315 or a portion of the encoded image data 315 to one or more other devices and/or entities, such as a communication component of another vehicle, and/or a communication component not associated with a vehicle 305 (e.g., a ground-based communication component 335).

In some embodiments, an image encoding device 325 is a device or entity configured to convert image data 315 from a first format to a second format. For example, an image encoding device may be configured to convert raw image data to compressed image data. As described herein, an image encoding device 325 may be an example of a constant bit rate image encoding device or a variable bit rate image encoding device. A constant bit rate image encoding device may be configured to compress image data 315 at a fixed or constant bit rate, which refers to a quantity of data encoded for a given unit of time. A variable bit rate image encoding device may be configured to compress image data 315 at a variable or dynamic bit rate. For example, a variable bit rate encoder may compress image data 315 at a first bit rate for a duration and compress image data 315 at second bit rate for a second duration. In some examples, a variable bit rate encoder may adjust a bit rate in response to receiving a message indicating that the bit rate should be adjusted.

Although some examples described herein refer to image encoding devices 325 as being implemented in hardware, image encoding devices 325 may also be implemented virtually, as software-based image encoding elements. Accordingly, any reference to an image encoding device 325 described herein may refer to a hardware image encoding device or a software image encoding device. As one illustrative example of a software image encoding device, one or more processors may be configured to execute or otherwise cause execution of one or more algorithms that compress or otherwise encode raw image data 315.

As described herein, a vehicle 305 may include one or more image encoding devices 325, which may be utilized to encode image data 315, such as vehicle-relevant image data, which may include image data 315 generated by an imaging component 310 of a vehicle 305. In some examples, a vehicle 305 may include multiple image encoding devices 325, such as multiple constant bit rate image encoding devices. In such examples, different image encoding devices 325 of the multiple image encoding devices 325 may be configured to encode image data 315 at different bit rates (e.g., simultaneously), which may reduce or eliminate latency otherwise associated with switching a bit rate of a variable bit rate image encoding device or activating a constant bit rate image encoding device that was not previously activated.

In some embodiments, image data 315 is a digital representation of visual information, which may be generated by an imaging component 310, such as a camera. Image data 315 may take on a variety of forms and/or formats, such as raw image data and compressed image data. In some examples, image data 315 may be communicated, processed (e.g., modified), stored, and/or generated by one or more components of a vehicle 305. Image data 315 may include video data and/or still image data. As described herein, image data 315 may be segmented into portions or units, such as frames 320. Each frame 320 may include a single still image.

In some embodiments, a frame 320 is a segmentation or unit of image data 315. A frame 320 may include a single image including one or more pixels captured or otherwise generated at a specific time instance. In some examples, multiple frames 320 may be displayed or communicated sequentially. When combined (e.g., displayed sequentially), multiple frames 320 may form a video. A quantity of frames 320 that is displayed per unit of time may be referred to as frame rate and may be indicative of video quality. In some examples, multiple frames 320 may be communicated or displayed successively (e.g., sequentially, without intervening pauses or time gaps between frames 320).

In some examples, an image encoding device 325-a of the plurality of image encoding devices 325 may encode a frame 320-a-1 of the plurality of frames 320 at a first bit rate. In some examples, an image encoding device 325-b of the plurality of image encoding devices 325 may encode the frame 320-a-2 of the plurality of frames 320 at a second bit rate. In some examples, the image encoding device 325-b may encode the frame 320-a-2 of the plurality of frames 320 at the second bit rate simultaneously with the image encoding device 325-a encoding the frame 320-a-1 at the first bit rate.

In some embodiments, a bit rate is a speed at which data, such as image data 315, is processed (e.g., encoded) and/or communicated. In some examples, bit rate may be expressed as a quantity of bits per a given unit of time, such as bits per second. As described herein, an image encoding device 325 may be configured to encode image data 315 at one or more bit rates. In some examples, a bit rate may be indicative of or otherwise correspond to processing speed and/or available bandwidth for a given wireless connection. For example, bit rate for data communications may be adjusted based on available bandwidth.

In some examples, one or more communication components 330 of the vehicle 305 may transmit the frame 320-a-1 encoded at the first bit rate. In some embodiments, a communication component 330 is a device or circuitry configured to communicate or otherwise cause communication of data with one or more other devices or components. For example, communication circuitry, such as a transmitter, a receiver, and/or a transceiver may be an example of a communication component 330. In some examples, a vehicle 305 may include one or more communication components 330, which may be utilized to communicate data, such as image data 315 (e.g., one or more encoded frames 320), with one or more other communication components. For example, a communication component 330 of a vehicle 305 may receive image data 315 from one or more encoders and may communicate the image data 315 to a ground-based communication component 335, such as a receiving device of a vehicle control system. Additionally, or alternatively, a communication component 330 of a vehicle 305 may receive data, such as one or more feedback messages 340, from one or more other communication components. For example, the ground-based communication component 335 may transmit a feedback message 340 to a communication component 330 of a vehicle 305. The feedback message 340 may indicate one or more quality metrics 345 indicative of data quality for received data (e.g., the frame 320-a-1, the frame 320-b-2, and/or the like). As described herein, the terms "communication component 330," "communication device," "communication circuitry," and "communication entity" may be used interchangeably without loss of meaning to refer to any entity capable of communicating information.

In some examples, the one or more communication components 330 may receive a feedback message 340 including an indication of a quality metric 345 for the frame 320-a-1 encoded at the first bit rate. In some examples, the image encoding device 325-b of the plurality of image encoding devices 325 may encode a frame 320-b-2 of the plurality of frames 320 at the second bit rate. In some examples, the one or more communication components 330 of the vehicle 305 may transmit the frame 320-b-2 encoded at the second bit rate. In some examples, the transmitting may be based on the indication of the quality metric 345. For example, a component of the vehicle 305, such as one or more processors (not shown), or any one or more processing components not included in the vehicle 305 (e.g., one or more cloud-based processors) may determine based on the quality metric 345 to output one or more frames 320 encoded at the second bit rate by the image encoding device 325-b in order to improve the quality metric 345 for subsequent communications.

In some embodiments, a feedback message 340 is a communication of information that is indicative of a status, quality metric 345, and/or outcome associated with a prior communication and/or prior event. For example, a first communication device (e.g., the ground-based communication component 335) may transmit a feedback message 340 to a second communication device (e.g., the communication component 330). The feedback message 340 may indicate a packet error rate for a communication previously transmitted from the second communication device to the first communication device.

In some examples, the second communication device may receive the feedback message 340 and relay the feedback message to one or more processors (not shown) and/or one or more other components or devices configured to modify one or more communication parameters and/or communication configurations. For example, the second communication device may relay the feedback message 340 to one or more processors, which may cause the one or more communication components 330 to cease transmission of one or more frames 320 encoded by the image encoding device 325-a and begin transmission of one or more frames 320 encoded by the image encoding device 325-b, which may improve the packet error rate for future data transmissions. In some other examples, the feedback message 340 may be relayed directly to the one or more image encoding devices 325, which may be configured to activate or deactivate encoding operations based on the feedback message 340 (e.g., the image encoding devices 325 may be equipped with one or more internal processors and/or control systems). Additionally, or alternatively, the one or more communication components 330 may include one or more internal processors and/or control systems, which may be configured to select one or more frames 320 for communication based on the feedback message 340.

As described herein, image data 315 encoded by an image encoding device 325-a at a first bit rate may be communicated to a ground-based computing entity (e.g., a ground-based communication component 335). The ground-based computing entity may determine a quality metric 345 for the image data 315 and communicate the quality metric 345 to one or more processors associated with the image encoding device 325-a. The one or more processors may determine that the quality metric 345 satisfies a threshold quality metric (e.g., the quality metric 345 is below a threshold quality metric) and determine to cease communication of the image data 315 encoded at the first bit rate based on the quality metric 345 satisfying the threshold. Additionally, or alternatively, the one or more processors may determine to output or otherwise communicate image data 315 encoded at a second bit rate by an image encoding device 325-b based on the quality metric 345 satisfying the threshold.

In some embodiments, a quality metric 345 is an indicator or measurement of quality. In some examples, a quality metric 345 may indicate a quality of image data 315 or an extent to which image data 315 is effectively and/or efficiently communicated over a wireless network. Some non-limiting examples of quality metrics 345 include packet error rate, resolution, frame rate, bit rate, compression efficiency, color depth, color accuracy, signal-to-noise ratio, audio quality, and/or the like. A quality metric 345 may be represented or otherwise indicated by a value, which may be included in a message, such as a feedback message 340. In some examples, image data 315 encoded at specific bit rates may be communicated based on a quality metric 345 for the image data 315. For example, image data 315 encoded at a first bit rate may be transmitted or otherwise displayed until a feedback message 340 is received indicating a quality metric 345, which may inform a decision to transmit or otherwise display image data 315 encoded at a second bit rate to improve the quality metric 345.

In some examples, the frame 320-b may be successive to the frame 320-a. In some embodiments, the term successive refers to a sequential or incremental progression of events, actions, or data units occurring in a continuous manner during a time period. For example, image data 315 or subdivisions of image data 315, such as frames 320, may be communicated and/or displayed in a successive manner. In such examples, frames 320 may be communicated without intervening gaps or time intervals greater than a threshold time interval. For example, a frame 320-b may occur or may otherwise be communicated directly after a frame 320-a. In some examples, the term "successive" may refer to a communication of two or more frames 320 without delay or latency (e.g., a time gap between frames 320 does not exceed a threshold delay or latency).

In some examples, the image encoding device 325-a of the plurality of image encoding devices 325 may encode the frame 320-b-1 of the plurality of frames 320 at the first bit rate simultaneously with the image encoding device 325-b encoding the frame 320-b-2 at the second bit rate. In some examples, the quality metric 345 may include a packet error rate. In some embodiments, packet error rate is a quality metric 345 used to quantify a frequency or probability of errors occurring in data packets transmitted over a communication channel or network. In some examples, packet error rate may represent a ratio of incorrectly received packets to a total quantity of packets transmitted. Packet error rate may be expressed as a fraction or a percentage and may be included in a feedback message 340. As described herein, a first communication device may communicate a feedback message 340 including an indication of a packet error rate to a second communication device. The second communication device may then transmit the packet error rate to one or more processors, which may determine to modify a communication configuration (e.g., to switch from communicating frames 320 output by an image encoding device 325-a to frames 320 output by an image encoding device 325-b) based on the packet error rate.

In some examples, the frame 320-a-1 encoded at the first bit rate may be transmitted via a satellite communication link. In some embodiments, a satellite communication link is a type of communication link, which may be established between communication devices for the purpose of communicating information. In some examples, a satellite communication link may correspond to or otherwise be associated with a specific communication channel over which data may be communicated. A satellite communication link may enable a first terrestrial-based communication device (e.g., a ground-based communication device or an aerial communication device, such as a communication device of an aircraft) to communicate with a second terrestrial-based communication device via one or more satellites that serve to relay the communications. For example, a first communication device (e.g., a smartphone) may transmit a data communication to a satellite, which may relay the data communication to a second communication device (e.g., a smartphone).

Communicating via a satellite communication link may provide several advantages when compared to communications utilizing other types of communication links. For example, satellite communication links may provide larger coverage areas and extended communication range when compared to terrestrial-based communication links. Additionally, or alternatively, satellite communication links may provide increased bandwidth when compared to terrestrial-based communication links.

In some examples, the image encoding device 325-a may be configured to continuously encode the image data 315 at the first bit rate and the image encoding device 325-b may be configured to continuously encode the image data 315 at the second bit rate. In some embodiments, the term continuous refers to an uninterrupted or ongoing process or action. For example, one or more image encoding devices 325 may be configured to operate or otherwise encode data continuously. In such examples, multiple image encoding devices 325 may be activated and may continue to operate continuously without consideration for whether encoded data is transmitted or not. For example, an image encoding device 325-a may continuously encode data at a first bit rate and an image encoding device 325-b may continuously encode data at second bit rate (e.g., when data is provided to the image encoding devices 325), even if only the data encoded at the first bit rate is transmitted or otherwise utilized. Such continuous operation of multiple encoders may enable an output data stream (e.g., of one or more frames 320) to be switched or modified without introducing latency otherwise associated with activating image encoding devices 325 or switching a bit rate of a variable bit rate encoding device. For example, a first quantity of frames 320 encoded by an image encoding device 325-a may be transmitted for a first duration and a second quantity of frames 320 encoded by an image encoding device 325-b may be transmitted for a second duration that is successive to the first duration. Thus, no delay or latency is introduced between the first quantity of frames 320 and the second quantity of frames 320 (e.g., between the frame 320-a-1 and the frame 320-b-2).

In some examples, the frame 320-a-1 encoded at the first bit rate may be transmitted to a ground-based communication component 335. In some embodiments, a ground-based communication component 335 is a communication component or communication device that is located at a ground-based location. For example, a control center or control system for a UAV may include one or more ground-based communication components 335, which may receive communications from and transmit communications to the UAV. In some examples, a ground-based communication component 335 may be stationary. In some other examples, a ground-based communication component 335 may be mobile. For example, a ground-based vehicle 305, such as an automobile may include a ground-based communication component 335.

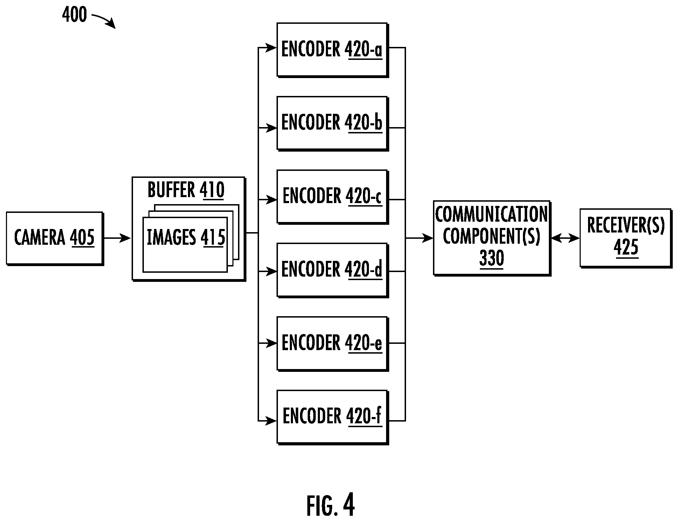

FIG. 4 is an operational example 400 of an encoder configuration that enables fast encoder switching in accordance with one or more embodiments of the present disclosure. The operational example 400 includes a camera 405 and a buffer 410, which may be examples of imaging components 310, as described with reference to FIG. 3. Additionally, or alternatively, the operational example 400 includes a plurality of encoders 420, one or more communication components 330, and one or more receivers 425, which may be examples of image encoding devices 325, communication components 330, and ground-based communication components 335, respectively, as described with reference to FIG. 3.

The buffer 410 may include or may otherwise be configured to store and/or communicate one or more images 415 in YUV format. The one or more images 415 may be buffered in video random access memory (VRAM) and/or random access memory (RAM). In some cases, the one or more images 415 may be modified or otherwise manipulated (e.g., by the buffer 410 and/or by one or more other components, such as one or more processors (not shown)) prior to being transmitted to the multiple encoders 420. Each encoder 420 may be configured to encode image data (e.g., the images 415) at a given bit rate. For example, the encoder 420-a may be configured to encode the image data at 160 kilobits per second (kbps), the encoder 420-b may be configured to encode the image data at 120 kbps, the encoder 420-c may be configured to encode the image data at 100 kbps, the encoder 420-d may be configured to encode the image data at 80 kbps, the encoder 420-e may be configured to encode the image data at 60 kbps, and the encoder 420-f may be configured to encode the image data at 45 kbps, although other bit rates may be utilized without loss of meaning.

As described herein, the encoders 420 may simultaneously encode the image data at different bit rates, which may enable fast switching between encoder outputs without introducing latency otherwise associated with encoder activation or bit rate adjustment of a variable bit rate encoder. For example, one or more frames output by the encoder 420-a may be communicated to the one or more receivers 425 during a first time interval and one or more frames output by the encoder 420-b may be communicated to the one or more receivers 425 during a second time interval subsequent to the first time interval. Accordingly, the transition between the one or more frames output by the encoder 420-a and the one or more frames output by the encoder 420-b may occur seamlessly, without latency or delay. In such examples, data may be received or otherwise viewed by one or more users without buffering delay or latency, thereby improving user experience when compared to other techniques that introduce latency when switching a bit rate of a variable bit rate encoder, or when activating a constant bit rate encoder that has not been previously activated.

In one illustrative example, each encoder 420 may be configured to encode image data with a same frame resolution and a same framerate. Such a configuration may ensure that all of the encoders 420 output compatible video streams that can be decoded by the one or more receivers 425. In such examples, each encoder 420 may be initialized or otherwise activated with different constant bit rates set. In operation, only one output of an encoded video stream is transmitted over the network for a given time interval. When a feedback message indicates that a network condition has changed, a new output compressed video stream may be selected based on the network condition (e.g., a measured packet error rate). In such examples, relatively better network conditions may result in the selection of relatively high bit rate video streams and relatively poor network conditions may result in the selection of relatively low bit rate video stream. Such techniques may enable the delivery of a continuous, real-time video stream without interruption, without video lag and without peaks in bit rate.

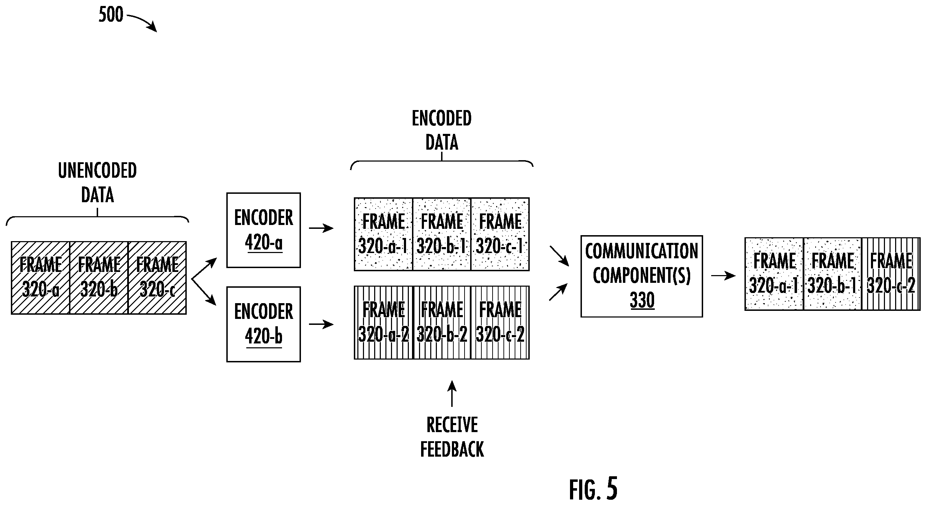

FIG. 5 is an operational example 500 of a communication schematic that illustrates fast encoder switching in accordance with one or more embodiments of the present disclosure. The operational example 500 includes encoders 420, which may be examples of encoders 420 and image encoding devices 320, as described with reference to FIGs. 3-4. Additionally, the operational example 500 includes one or more communication components 330, which may be examples of communication components 330, as described with reference to FIGs. 3-4. As described herein, the encoders 420 may receive a plurality of frames 320 (e.g., unencoded frames, unencoded image data), encode the plurality of frames 320 at different bit rates, and output the plurality of frames 320 to one or more communication components 330. The one or more communication components 330 may then selectively communicate at least a subset of the plurality of frames 320. For example, the one or more communication components 330 or one or more control elements for the one or more communication components 330 (e.g., one or more processors) may select which frames 320 to transmit based on a preferred bit rate, which may be indicated in a feedback message or configured based on one more criteria.

In some examples, the encoder 420-a may encode and output one or more frames 320 at a first bit rate. For example, the encoder 420-a may encode the frame 320-a-1, the frame 320-b-1, and the frame 320-c-1 at a first bit rate. The encoder 420-b may encode and output one or more frames 320 at a second bit rate different from the first bite rate. For example, the encoder 420-b may encode the frame 320-a-2, the frame 320-b-2, and the frame 320-c-2 at the second bit rate. The communication component 330 may receive one or more of the frames output by the encoders 420. In one embodiment, the one or more communication components 330 may receive each of the frames 320 output by the encoders 420. In another embodiment, the one or more communication components 330 may receive a subset of the frames 320 output by the encoders 420. For example, the frame 320-a-1, the frame 320-b-1, and the frame 320-c-2 may be received by the one or more communication components 330 based on a determination (e.g., by the one or more communication components 330, by one or more processors) that the one or more communication components 330 is to output the respective frames 320.

In some examples, a feedback message may be received (e.g., by the one or more communication components 330, by one or more processors), which may indicate one or more quality metrics for one or more frames 320. For example, the one or more quality metrics may be indicative of a quality for the frame 320-b-1 (e.g., a frame 320 most recently received by a receiving device). In some examples, the one or more communication components 330 may cease communication of one or more frames 320 output by a specific encoder 420 if the quality metric satisfies a threshold quality metric (e.g., if a quality metric for one or more previously communicated frames 320 is below a threshold quality metric). For example, the one or more communication components 330 may refrain from outputting the frame 320-c-1 and instead transmit the frame 320-c-2 in place of the frame 320-c-1. As described herein, the frame 320-c-2 may have a different bit rate than the frame 320-c-1, which may improve communication quality.

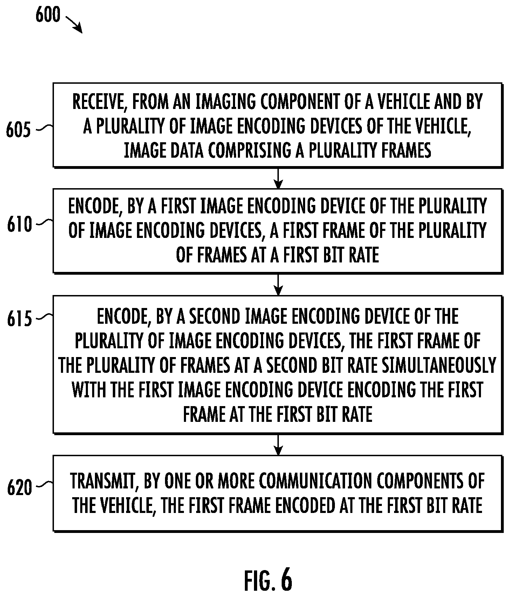

FIG. 6 illustrates a process 600 for fast encoder switching in accordance with one or more embodiments of the present disclosure. Specifically, FIG. 6 depicts operations of an example process 600. In some embodiments, the process 600 is embodied by computer program code stored on a non-transitory computer-readable storage medium of a computer program product configured for execution to perform the process as depicted and described. Additionally, or alternatively, in some embodiments, the process 600 is performed by one or more specifically configured computing devices, such as one or more computing devices alone or in communication with one or more other components, devices, systems, and/or the like.

In this regard, in some such embodiments, the computing device is specially configured by computer-coded instructions (e.g., computer program instructions) stored thereon, for example in the memory and/or another component depicted and/or described herein and/or otherwise accessible to the computing device, for performing the operations as depicted and described. In some embodiments, the computing device is in communication with one or more external apparatuses, systems, devices, and/or the like, to perform one or more of the operations as depicted and described. For example, the computing device, in some embodiments, is in communication with an end-user computing device, client device, and/or the like. For purposes of simplifying the description, the process 600 is described as performed by and from the perspective of the computing device.

The process 600 begins at operation 605. At operation 605, the computing device includes means such as one or more sensors, memory, navigation circuitry, flight operations circuitry, virtual management circuitry, communications circuitry, input/output circuitry, one or more processors, or a combination thereof, to receive, from an imaging component of a vehicle and by a plurality of image encoding devices of the vehicle, image data comprising a plurality of frames.

At operation 610, the computing device includes means such as one or more sensors, memory, navigation circuitry, flight operations circuitry, virtual management circuitry, communications circuitry, input/output circuitry, one or more processors, or a combination thereof, to encode, by a first image encoding device of the plurality of image encoding devices, a first frame of the plurality of frames at a first bit rate.

At operation 615, the computing device includes means such as one or more sensors, memory, navigation circuitry, flight operations circuitry, virtual management circuitry, communications circuitry, input/output circuitry, one or more processors, or a combination thereof, to encode, by a second image encoding device of the plurality of image encoding devices, the first frame of the plurality of frames at a second bit rate simultaneously with the first image encoding device encoding the first frame at the first bit rate.

At operation 620, the computing device includes means such as one or more sensors, memory, navigation circuitry, flight operations circuitry, virtual management circuitry, communications circuitry, input/output circuitry, one or more processors, or a combination thereof, to transmit, by one or more communication components of the vehicle, the first frame encoded at the first bit rate.

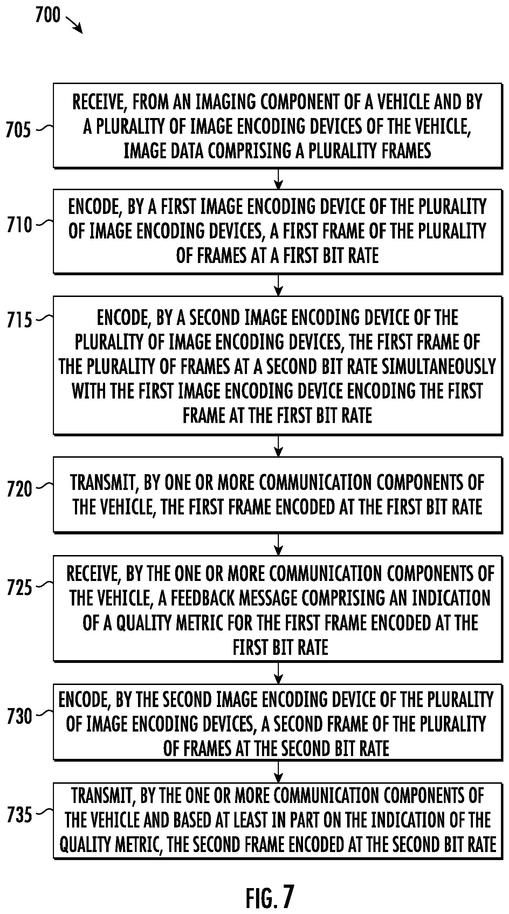

FIG. 7 illustrates a process 700 for fast encoder switching in accordance with one or more embodiments of the present disclosure. Specifically, FIG. 7 depicts operations of an example process 700. In some embodiments, the process 700 is embodied by computer program code stored on a non-transitory computer-readable storage medium of a computer program product configured for execution to perform the process as depicted and described. Additionally, or alternatively, in some embodiments, the process 700 is performed by one or more specifically configured computing devices, such as one or more computing devices alone or in communication with one or more other components, devices, systems, and/or the like.

In this regard, in some such embodiments, the computing device is specially configured by computer-coded instructions (e.g., computer program instructions) stored thereon, for example in the memory and/or another component depicted and/or described herein and/or otherwise accessible to the computing device, for performing the operations as depicted and described. In some embodiments, the computing device is in communication with one or more external apparatuses, systems, devices, and/or the like, to perform one or more of the operations as depicted and described. For example, the computing device, in some embodiments, is in communication with an end-user computing device, client device, and/or the like. For purposes of simplifying the description, the process 700 is described as performed by and from the perspective of the computing device.

The process 700 begins at operation 705. At operation 705, the computing device includes means such as one or more sensors, memory, navigation circuitry, flight operations circuitry, virtual management circuitry, communications circuitry, input/output circuitry, one or more processors, or a combination thereof, to receive, from an imaging component of a vehicle and by a plurality of image encoding devices of the vehicle, image data comprising a plurality of frames.

At operation 710, the computing device includes means such as one or more sensors, memory, navigation circuitry, flight operations circuitry, virtual management circuitry, communications circuitry, input/output circuitry, one or more processors, or a combination thereof, to encode, by a first image encoding device of the plurality of image encoding devices, a first frame of the plurality of frames at a first bit rate.

At operation 715, the computing device includes means such as one or more sensors, memory, navigation circuitry, flight operations circuitry, virtual management circuitry, communications circuitry, input/output circuitry, one or more processors, or a combination thereof, to encode, by a second image encoding device of the plurality of image encoding devices, the first frame of the plurality of frames at a second bit rate simultaneously with the first image encoding device encoding the first frame at the first bit rate.

At operation 720, the computing device includes means such as one or more sensors, memory, navigation circuitry, flight operations circuitry, virtual management circuitry, communications circuitry, input/output circuitry, one or more processors, or a combination thereof, to transmit, by one or more communication components of the vehicle, the first frame encoded at the first bit rate.

At operation 725, the computing device includes means such as one or more sensors, memory, navigation circuitry, flight operations circuitry, virtual management circuitry, communications circuitry, input/output circuitry, one or more processors, or a combination thereof, to receive, by the one or more communication components of the vehicle, a feedback message comprising an indication of a quality metric for the first frame encoded at the first bit rate.

At operation 730, the computing device includes means such as one or more sensors, memory, navigation circuitry, flight operations circuitry, virtual management circuitry, communications circuitry, input/output circuitry, one or more processors, or a combination thereof, to encode, by the second image encoding device of the plurality of image encoding devices, a second frame of the plurality of frames at the second bit rate.

At operation 735, the computing device includes means such as one or more sensors, memory, navigation circuitry, flight operations circuitry, virtual management circuitry, communications circuitry, input/output circuitry, one or more processors, or a combination thereof, to transmit, by the one or more communication components of the vehicle and based at least in part on the indication of the quality metric, the second frame encoded at the second bit rate.

### CONCLUSION

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

In some embodiments, some of the operations above may be modified or further amplified. Furthermore, in some embodiments, additional optional operations may be included. Modifications, amplifications, or additions to the operations above may be performed in any order and in any combination.

Although an example processing system has been described above, implementations of the subject matter and the functional operations described herein can be implemented in other types of digital electronic circuitry, or in computer software, firmware, or hardware, including the structures disclosed in this specification and their structural equivalents, or in various combinations.

Embodiments of the subject matter and the operations described herein can be implemented in digital electronic circuitry, or in computer software, firmware, or hardware, including the structures disclosed in this specification and their structural equivalents, or in various combinations. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially generated, propagated signal, e.g., a machine- generated electrical, optical, or electromagnetic signal, which is generated to encode information/data for transmission to suitable receiver apparatus for execution by an information/data processing apparatus.

A computer storage medium can be, or be included in, a computer-readable storage device, a computer-readable storage substrate, a random or serial access memory array or device, or a combination. Moreover, while a computer storage medium is not a propagated signal, a computer storage medium can be a source or destination of computer program instructions encoded in an artificially generated, propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or any combination thereof. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any processor of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks.

However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter- network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method comprising:
receiving, from an imaging component of a vehicle and by a plurality of image encoding devices of the vehicle, image data comprising a plurality of frames;
encoding, by a first image encoding device of the plurality of image encoding devices, a first frame of the plurality of frames at a first bit rate;
encoding, by a second image encoding device of the plurality of image encoding devices, the first frame of the plurality of frames at a second bit rate simultaneously with the first image encoding device encoding the first frame at the first bit rate; and
transmitting, by one or more communication components of the vehicle, the first frame encoded at the first bit rate.

2. The method of claim 1, further comprising:
receiving, by the one or more communication components of the vehicle, a feedback message comprising an indication of a quality metric for the first frame encoded at the first bit rate;
encoding, by the second image encoding device of the plurality of image encoding devices, a second frame of the plurality of frames at the second bit rate; and
transmitting, by the one or more communication components of the vehicle and based at least in part on the indication of the quality metric, the second frame encoded at the second bit rate.

3. The method of claim 2, wherein the second frame is successive to the first frame.

4. The method of claim 2, further comprising:
encoding, by the first image encoding device of the plurality of image encoding devices, the second frame of the plurality of frames at the first bit rate simultaneously with the second image encoding device encoding the second frame at the second bit rate.

5. The method of claim 2, wherein the quality metric comprises a packet error rate.

6. The method of claim 1, wherein the first frame encoded at the first bit rate is transmitted via a satellite communication link.

7. The method of claim 1, wherein the first image encoding device is configured to continuously encode the image data at the first bit rate and the second image encoding device is configured to continuously encode the image data at the second bit rate.

8. The method of claim 1, wherein transmitting the first frame encoded at the first bit rate further comprises:
transmitting the first frame to a ground-based communication component.

9. A system comprising:
an imaging component configured to output image data comprising a plurality of frames;
a first image encoding device of a plurality of image encoding devices in communication with the imaging component, the first image encoding device configured to encode a first frame of the plurality of frames at a first bit rate;
a second image encoding device of the plurality of image encoding devices in communication with the imaging component, the second image encoding device configured to encode the first frame of the plurality of frames at a second bit rate simultaneously with the first image encoding device encoding the first frame at the first bit rate; and
one or more communication components in communication with the first image encoding device and the second image encoding device, the one or more communication components configured to transmit the first frame encoded at the first bit rate.

10. The system of claim 9, wherein:
the one or more communication components are further configured to receive a feedback message comprising an indication of a quality metric for the first frame encoded at the first bit rate;
the second image encoding device of the plurality of image encoding devices is further configured to encode a second frame of the plurality of frames at the second bit rate; and
the one or more communication components are further configured to transmit, based at least in part on the indication of the quality metric, the second frame encoded at the second bit rate.

11. The system of claim 10, wherein the second frame is successive to the first frame.

12. The system of claim 10, wherein the first image encoding device of the plurality of image encoding devices is further configured to encode the second frame of the plurality of frames at the first bit rate simultaneously with the second image encoding device encoding the second frame at the second bit rate.

13. The system of claim 10, wherein the quality metric comprises a packet error rate.

14. The system of claim 9, wherein the first frame encoded at the first bit rate is transmitted via a satellite communication link.

15. An apparatus comprising:
one or more processors; and
a memory storing instructions that, when executed by the one or more processors, cause the apparatus to:
receive, from an imaging component and by a plurality of image encoding devices, image data comprising a plurality of frames;
encode, by a first image encoding device of the plurality of image encoding devices, a first frame of the plurality of frames at a first bit rate;
encode, by a second image encoding device of the plurality of image encoding devices, the first frame of the plurality of frames at a second bit rate simultaneously with the first image encoding device encoding the first frame at the first bit rate; and
transmit, by one or more communication components, the first frame encoded at the first bit rate.
